# EUROPEAN PATENT SPECIFICATION

(11) **EP 4 320 841 B1**
(45) Date of publication and mention of the grant of the patent: **09.04.2025**
(21) Application number: 22711377.6
(22) Date of filing: 25.02.2022
(51) Int. Cl.: H04L 45/00, H04L 67/1095

(54) **PCE FOR BIER-TE INGRESS PROTECTION**
PCE FÜR BIER-TE-EINGANGSSCHUTZ
PCE POUR PROTECTION CONTRE UNE INTRUSION DE BIER-TE

(30) Priority: 22.04.2021 US 202163178343 P
(43) Date of publication of application: 14.02.2024
(73) Proprietor: Huawei Technologies Co., Ltd., Shenzhen, Guangdong 518129 (CN)
(72) Inventor: CHEN, Huaimo, Plano, Texas 75024 (US)
(74) Representative: Gill Jennings & Every LLP
(86) International application number: PCT/US2022/017986
(87) International publication number: WO 2022/104398

(56) References cited:
- US-A1- 2020 389 385
- CHEN M MCBRIDE FUTUREWEI G MISHRA VERIZON INC Y LIU CHINA MOBILE A WANG CHINA TELECOM L LIU FUJITSU X LIU VOLTA NETWORKS H: "PCE for BIER-TE Ingress Protection draft-chen-pce-bier-te-ingress-protect-00; draft-chen-pce-bier-te-ingress-protect-00.txt", 11 July 2021 (2021-07-11), pages 1 - 16, XP015146764, Retrieved from the Internet <URL:https://tools.ietf.org/html/draft-chen-pce-bier-te-ingress-protect-00> [retrieved on 20210711]
- ECKERT HUAWEI G CAUCHIE BOUYGUES TELECOM W BRAUN M MENTH UNIVERSITY OF TUEBINGEN T: "Protection Methods for BIER-TE; draft-eckert-bier-te-frr-02.txt", PROTECTION METHODS FOR BIER-TE; DRAFT-ECKERT-BIER-TE-FRR-02.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 30 June 2017 (2017-06-30), pages 1 - 16, XP015120504
- CHEN CH ZHU B XU ZTE CORPORATION R: "PCEP Procedures and Protocol Extensions for Using PCE as a Central Controller (PCECC) of BIER; draft-chen-pce-pcep-extension-pce-controller-bier-00.txt", 27 September 2020 (2020-09-27), pages 1 - 10, XP015141856, Retrieved from the Internet <URL:https://tools.ietf.org/html/draft-chen-pce-pcep-extension-pce-controller-bier-00> [retrieved on 20200927]

## Description

### TECHNICAL FIELD

The present disclosure is generally related to the field of network communication and, in particular, to a path computation element (PCE) configured to set up ingress protection for Bit Index Explicit Replication-Traffic/Tree Engineering (BIER-TE) domain.

### BACKGROUND

BIER mechanisms provide optimized forwarding of multicast data packets through a BIER domain. BIER domains may not require the use of a protocol for explicitly building multicast distribution trees. Further, BIER domains may not require intermediate nodes to maintain any per-flow state. BIER is described in further detail in Internet Engineering Task Force (IETF) document Request for Comments (RFC) 8279 entitled "Multicast Using Bit Index Explicit Replication (BIER)" by IJ. Wijnands, et al., published November 2017. "PCEP Procedures and Protocol Extensions for Using PCE as a Central Controller (PCECC) of BIER; draft-chen-pce-pcep-extension-pce-controller-bier-00.txt" by Chen et al., published September 2020, discloses procedures and PCEP protocol extensions for using the PCE as the central controller for BIER. "Protection Methods for BIER-TE; draft-eckert-bier-te-frr-02.txt" by Eckert et al., published June 2017, discloses protection methods for the BIER-TE architecture. "PCE for BIER-TE Ingress Protection; draft-chen-pee-bier-te-ingress-protect-00" by Chen et al., published July 2021, discloses extensions to Path Computation Element (PCE) Communication Protocol (PCEP) for protecting the ingress of a BIER-TE path.

Traffic Engineering (TE) is the process of steering traffic across to a telecommunications network to facilitate efficient use of available bandwidth between a pair of routers. Bit Index Explicit Replication (BIER) Traffic/Tree Engineering (BIER-TE) is described in IETF document "Tree Engineering for Bit Index Explicit Replication (BIER-TE)" by T. Eckert, et al., published July 9, 2021.

### SUMMARY

The disclosed aspects/embodiments provide techniques that allow a path computation element (PCE) to set up ingress protection for a Bit Index Explicit Replication Traffic/Tree Engineering (BIER-TE) domain. In order to facilitate the techniques, the present disclosure provides extensions to type length values (TLVs) and sub-TLVs and a new path computation element protocol (PCEP) object, each of which are carried in PCEP messages. Using the extensions and/or the new PCEP object, packet routing within the BIER-TE domain is improved relative to existing techniques.

The invention relates to a method implemented by a path computation element, PCE, according to claim 1 and corresponding PCE claim 7. Dependent clams disclose preferred embodiments of the invention.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of a BIER-TE topology including a BIER-TE domain.
FIG. 2 is a schematic diagram of a BIER-TE-Path_Ingress_Protection_Capability sub-type length value (sub-TLV) according to an embodiment of the disclosure.
FIG. 3 is a schematic diagram of a Path Computation Element (PCE) for a Central Controller (PCECC) Capability TLV according to an embodiment of the disclosure.
FIG. 4 is a schematic diagram of a BIER-TE-Path_Ingress_Protection TLV according to an embodiment of the disclosure.
FIG. 5 is a schematic diagram of a Primary Ingress Internet Protocol version 4 (IPv4) Address sub-TLV according to an embodiment of the disclosure.
FIG. 6 is a schematic diagram of a Primary Ingress Internet Protocol version 6 (IPv6) Address sub-TLV according to an embodiment of the disclosure.
FIG. 7 is a schematic diagram of a Service Label sub-TLV according to an embodiment of the disclosure.
FIG. 8 is a schematic diagram of a Service Identifier (ID) sub-TLV according to an embodiment of the disclosure.
FIG. 9 is a schematic diagram of a BIER-TE-Path_Ingress-Protection Object Body according to an embodiment of the disclosure.
FIG. 10 is a schematic diagram of a Backup Ingress IPv4 Address TLV according to an embodiment of the disclosure.
FIG. 11 is a schematic diagram of a Backup Ingress IPv6 Address TLV according to an embodiment of the disclosure.
FIG. 12 is a method implemented by a network controller configured to control the BIER-TE domain according to an embodiment of the disclosure.
FIG. 13 is a schematic diagram of a network apparatus according to an embodiment of the disclosure.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Existing techniques for fast protection for a BIER-TE path (a.k.a., a point to multipoint (P2MP) path, a BIER-TE P2MP path, a BIER-TE tunnel, or variations thereof) have drawbacks. For example, existing solutions are limited to protecting the transit nodes and links of the BIER-TE path and, as such, are unable to provide fast protection for the ingress node. Because the ingress node adds the bit positions for the BIER-TE path into the header of every packet to be transported along the BIER-TE path, the ingress node is critical.

Disclosed herein are techniques that allow a path computation element (PCE) to set up ingress protection for a Bit Index Explicit Replication Traffic/Tree Engineering (BIER-TE) domain. In order to facilitate the techniques, the present disclosure provides extensions to type length values (TLVs) and sub-TLVs and a new path computation element protocol (PCEP) object, each of which are carried in PCEP messages. Using the extensions and/or the new PCEP object, packet routing within the BIER-TE domain is improved relative to existing techniques.

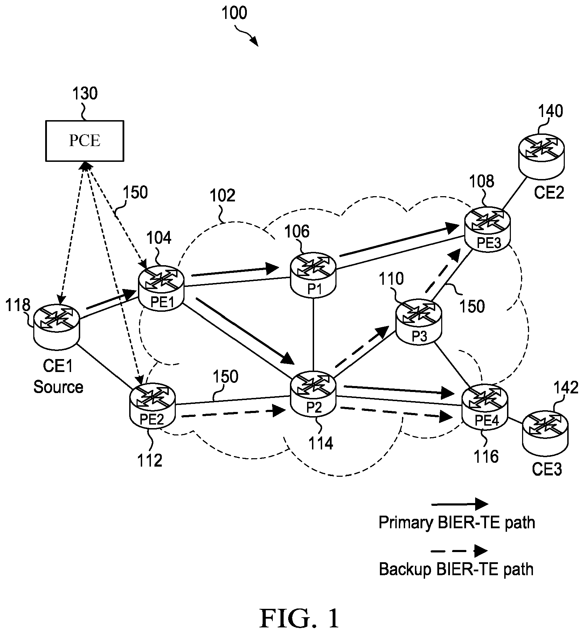

FIG. 1 is a schematic diagram of a BIER-TE topology 100 including a BIER-TE domain 102. The BIER-TE domain 102 may be part of a larger BIER-TE domain (not shown). As such, the BIER-TE domain 102 may be referred to herein as a BIER-TE sub-domain. The BIER-TE domain 102 comprises a plurality of network nodes 104, 106, 108, 110, 112, 114, and 116. While seven network nodes 104-116 are shown in the BIER-TE domain 102, more or fewer nodes may be included in practical applications.

Each of the network nodes 104-116 is a bit forwarding router (BFR). Some of the network nodes, namely the network nodes 104, 108, 112 and 116, are disposed at an edge of the BIER-TE domain 102. The network nodes 104, 108, 112 and 116 receiving multicast packets from outside the BIER-TE domain 102 may be referred to as an ingress BFR (BFIR). The network nodes 104, 108, 112 and 116 transmitting multicast packets out of the BIER-TE domain 102 may be referred to as an egress BFR (BFER). Depending on the direction of multicast packet traffic, each of the network nodes 104, 108, 112 and 116 may function as a BFIR or a BFER.

The network nodes 104 and 112 are in communication with a network node referred to as a first customer edge (CE1) 118. In the illustrated embodiment, the CE1 118 is a source. The source (e.g., a server, a data center, etc.) is configured to store information or data (e.g., media files, web pages, etc.) and deliver such information or data to a consumer upon request. The network node 108 is in communication with a second customer edge (CE2) 140 and the network node 116 is in communication with a third customer edge (CE3) 142. As such, packets received from the CE1 and routed through the BIER-TE domain 102 may eventually be delivered to the CE2 140 and/or the CE3 142 for consumption by the consumer.

Each of the network nodes 104-116 has one or more neighbor nodes. As used herein, a neighbor node refers to a network node that is only one hop away from the network node. For example, network node 106 has three neighbor nodes in FIG. 1, namely network node 104, network node 108, and network node 114. Indeed, each of network node 104, network node 108, and network node 114 is only one hop away from network node 106.

The network nodes 104-116 in FIG. 1 are coupled to, and communicate with each other, via links 150. The links 150 may be wired, wireless, or some combination thereof. In an embodiment, each of the links 150 may have a cost. The cost of each of the links 150 may be the same or different, depending on the BIER-TE network and conditions therein.

The BIER domain 102 is controlled by a network controller 130. In an embodiment, the network controller 130 is a path computation element (PCE). A PCE is a system component, application, or network node capable of determining and finding a suitable route for conveying data (e.g., packets) through a network between a source and a destination. In order to control the BIER-TE domain 102, in one embodiment, the network controller 130 is in communication with each of the network nodes therein, namely network nodes 104-116. That is, the network controller 130 is able to exchange messages with the network nodes 104-116. In another embodiment, the network controller 130 is in communication with each of the network edge nodes (i.e., BFIRs or BFERs) therein, namely network nodes 104, 108, 112 and 116. That is, the network controller 130 is able to exchange messages with the network nodes 104, 108, 112 and 116.

In an embodiment, a path computation client (PCC) is running on one or more of the network nodes 104-116, CE1 118, CE2 140, and/or CE3 142. A PCC is a client application or component configured to request that the PCE perform a path computation. For example, the PCC may request that the PCE calculate a BIER-TE path.

In the illustrated embodiment of FIG. 1, a primary BIER-TE path (as shown by bold arrows) extends from network node 104, which is the primary ingress node, to network node 108 and network node 116, which are the egress nodes. A backup BIER-TE path (as shown by bold dashed arrows) extends from network node 112, which is the backup ingress node, to network node 108 and network node 116, which are the egress nodes. The primary BIER-TE path and the backup BIER-TE path are each configured to transport traffic (e.g., multicast packets) from the CE1 118.

In normal operations, the CE1 118 sends multicast packets to network node 104, which is the primary ingress node. The network node 104 encapsulates the packets with a BIER-TE header, which includes an encoding of the primary BIER-TE path from the network node 104 to network node 108 and to network node 116. In an embodiment, the BIER-TE header includes bit positions for forward connected adjacencies.

When network node 104 fails, the CE1 118 sends multicast packets to the network node 112, which is the backup ingress node. The network node 112 encapsulates the packets with a BIER-TE header, which includes an encoding of the backup BIER-TE path from the network node 112 to network node 108 and to network node 116. In an embodiment, the BIER-TE header includes bit positions for forward connected adjacencies.

To support BIER-TE ingress protection, the network controller 130 sends information to network node 112. Such information includes, for example, the backup BIER-TE path and other information (e.g., the backup BIER-TE path, an address of a primary ingress node, a description of the multicast traffic, the service, etc.) as will be discussed in detail herein.

Using the embodiment of FIG. 1 as an example, three different cases involving the failure of the network node 104 are considered. In a first case, the CE1 118 is responsible for detecting the failure of the network node 104. Before any failure is detected, the CE1 118 sends multicast packets to the network node 104. In this embodiment, the network node 112, which is the backup ingress node, is ready to encapsulate packets with the backup BIER-TE path. After the CE1 118 detects the failure of the network node 104, the CE1 118 sends multicast packets to the network node 112. The network node 112 then encapsulates the packets with the BIER-TE path since the network node 112 is ready.

In a second case, the network node 112 is responsible for detecting the failure of the network node 104. Before any failure is detected, the CE1 118 sends multicast packets to both the network node 104 and the network node 112. In this embodiment, the network node 112 drops the packets. After the network node 112 detects the failure of the network node 104, the CE1 118 sends multicast packets to the network node 112. The network node 112 then encapsulates the packets with the BIER-TE path since the network node 112 is ready.

In a third case, the CE1 118 and the network node 112 are both responsible for detecting the failure of the network node 104. Before any failure is detected, the CE1 118 sends multicast packets to the network node 104. After the CE1 118 and/or the network node 112 detects the failure of the network node 104, the CE1 118 sends multicast packets to the network node 112. The network node 112 then encapsulates the packets with the BIER-TE path since the network node 112 is ready.

In order to implement the three different cases, the network controller 130 sends the PCC operating on the network node 112 the backup BIER-TE path, the address of the primary ingress, a description of the traffic carried by the BIER-TE path, and a service label or service ID carried by the BIER-TE path. The network controller 130 also sends the PCC operating on the CE1 118 instructions for implementing the three cases noted above. The network controller 130 is able to send this information using one or more TLVs, sub-TLVs, and/or object bodies, as discussed further below.

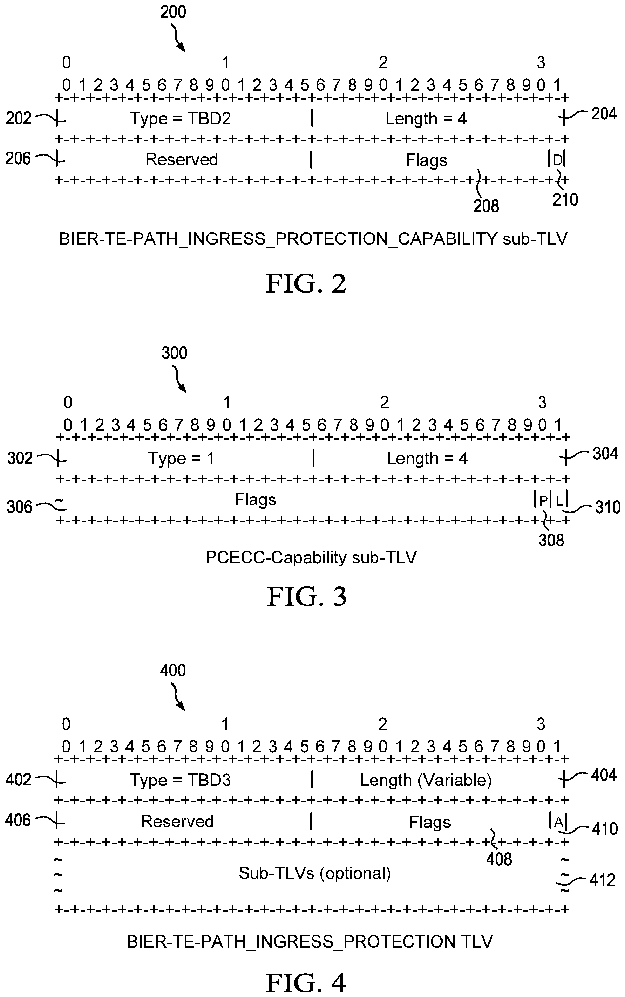

FIG. 2 is a schematic diagram of a BIER-TE-Path_Ingress_Protection_Capability sub-TLV 200 according to an embodiment of the disclosure. In an embodiment, the BIER-TE-Path_Ingress_Protection_Capability sub-TLV 200 is included in a Path_Setup_Type_Capability TLV of an open message. In an embodiment, the Path_Setup_Type_Capability TLV includes a path setup type (PST) field with a value to be assigned by the Internet Assigned Numbers Authority (IANA). In an embodiment, the value indicates that the path is a BIER-TE path (e.g., the backup BIER-TE path).

The BER-TE-Path_Ingress_Protection_Capability sub-TLV 200 comprises a type field 202, a length field 204, a reserved field 206, and a flags field 208. The type field 202 is 16 bits and the value in the type field 202 is to be assigned by the IANA. The length field 204 is 16 bits. In an embodiment, the value in the length field 204 is 4 to indicate that 4 bytes is the total length of the remainder of the sub-TLV, excluding the type and length fields 202, 204. The reserved field 206 is 16 bits. In an embodiment, the reserved field 206 is set to zero by the sender of the BIER-TE-Path_Ingress_Protection_Capability sub-TLV 200 and ignored by the receiver of the BIER-TE-Path_Ingress_Protection_Capability sub-TLV 200.

The flags field 208 includes one or more flags, such as the D flag 210. The D flag 210 is set to a first binary value (e.g., 1) to indicate that the network node is able to quickly detect a failure of the network node adjacent to the network node. The D flag 210 is also set to a second binary value (e.g., 0) when the network node is unable to quickly detect the failure of the network node adjacent to the network node. For example, when the network node 112 is able to quickly detect the failure of the network node 104, the D flag 210 is set to a value of 1.

FIG. 3 is a schematic diagram of a Path Computation Element (PCE) for a Central Controller (PCECC) Capability sub-TLV 300 according to an embodiment of the disclosure. In an embodiment, the PCECC Capability sub-TLV 300 is included in a Path_Setup_Type_Capability TLV of an open message.

The PCECC Capability sub-TLV 300 comprises a type field 302, a length field 304, and a flags field 306. The type field 302 is 16 bits and the value in the type field 302 is set to one to indicate that the sub-TLV 300 is a PCECC Capability sub-TLV and the length of the PCECC Capability sub-TLV 300 is 4 octets. The length field 204 is 16 bits. In an embodiment, the value in the length field 204 is 4 to indicate that flags field 306 is 32 bits.

The flags field 306 includes one or more flags, such as the P flag 308 and the L flag 310. The P flag 308 (for ingress protection) is set to a first binary value (e.g., 1) to indicate that the PCEP speaker supports and is willing to handle the PCECC instructions for ingress protection. The bit is set to 1 by both a PCC and a PCE for the PCECC ingress protection instruction download/report on a PCEP session.

The L flag 310 is set to a first binary value (e.g., 1) to indicate that the PCEP speaker will support and is willing to handle the PCECC instructions for label download. The bit is set to 1 by both a PCC and a PCE for the PCECC label download/report on a PCEP session.

FIG. 4 is a schematic diagram of a BIER-TE-Path_Ingress_Protection TLV 400 according to an embodiment of the disclosure. In an embodiment, the BIER-TE-Path_Ingress_Protection TLV 400 is included in a path computation label switched path (LSP) initiate request (PCInitiate) message.

The BIER-TE-Path_Ingress _Protection TLV 400 comprises a type field 402, a length field 404, a reserved field 406, a flags field 408, and a sub-TLVs field 412. The type field 402 is 16 bits and the value in the type field 402 is to be assigned by the IANA. The length field 404 is 16 bits. The value of the length field 404 is variable. In an embodiment, the value in the length field 404 is set to indicate the total length of the remainder of the TLV, excluding the type and length fields 402, 404.

The reserved field 406 is 16 bits. In an embodiment, the reserved field 406 is set to zero by the sender of the BIER-TE-Path_Ingress_Protection TLV 400 and ignored by the receiver of the BIER-TE-Path_Ingress_Protection TLV 400. The flags field 406 includes one or more flags, such as the A flag 410. The A flag 410 is set to a first binary value (e.g., 1) to request a PCC to let the forwarding entry for the backup BIER-TE path be active always. When the network node on which the PCC is running receives the PCECC Capability sub-TLV 300 with the P flag bit 308 set to 1, the network node sets the forwarding entry for the backup BIER-TE path in the forwarding table to 1. Once the forwarding entry is set, the network node is ready to use or uses the backup BIER-TE path to forward multicast packet traffic. The sub-TLVs field 412 is configured to carry any optional sub-TLVs.

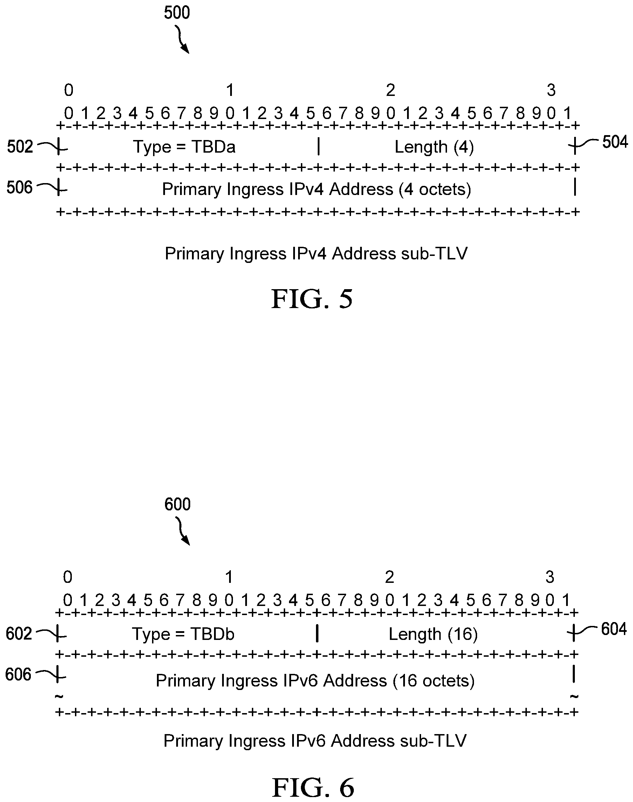

FIG. 5 is a schematic diagram of a Primary Ingress Internet Protocol version 4 (IPv4) Address sub-TLV 500 according to an embodiment of the disclosure. In an embodiment, the Primary Ingress IPv4 Address sub-TLV 500 is carried in the sub-TLVs field 412 of the BIER-TE-Path_Ingress_Protection TLV 400.

The Primary Ingress IPv4 Address sub-TLV 500 comprises a type field 502, a length field 504, and a primary ingress IPv4 Address field 506. The type field 502 is 16 bits and the value in the type field 502 is to be assigned by the IANA. The length field 504 is 16 bits. In an embodiment, the value in the length field 504 is 4 to indicate that the primary ingress IPv4 Address field 506 is 32 bits. The primary ingress IPv4 Address field 506 contains the address of the primary ingress node. For example, the primary ingress IPv4 Address field 506 may include the address of network node 104 in FIG. 1.

FIG. 6 is a schematic diagram of a Primary Ingress Internet Protocol version 6 (IPv6) Address sub-TLV according to an embodiment of the disclosure. In an embodiment, the Primary Ingress IPv6 Address sub-TLV 600 is carried in the sub-TLVs field 412 of the BIER-TE-Path_Ingress_Protection TLV 400.

The Primary Ingress IPv6 Address sub-TLV 600 comprises a type field 602, a length field 604, a primary ingress IPv6 Address field 606. The type field 602 is 16 bits and the value in the type field 602 is to be assigned by the IANA. The length field 604 is 16 bits. In an embodiment, the value in the length field 604 is 16 to indicate that the primary ingress IPv6 Address field 606 is 128 bits. The primary ingress IPv6 Address field 606 contains the IPv6 address of the primary ingress node. For example, the primary ingress IPv6 Address field 606 may include the IPv6 address of network node 104 in FIG. 1.

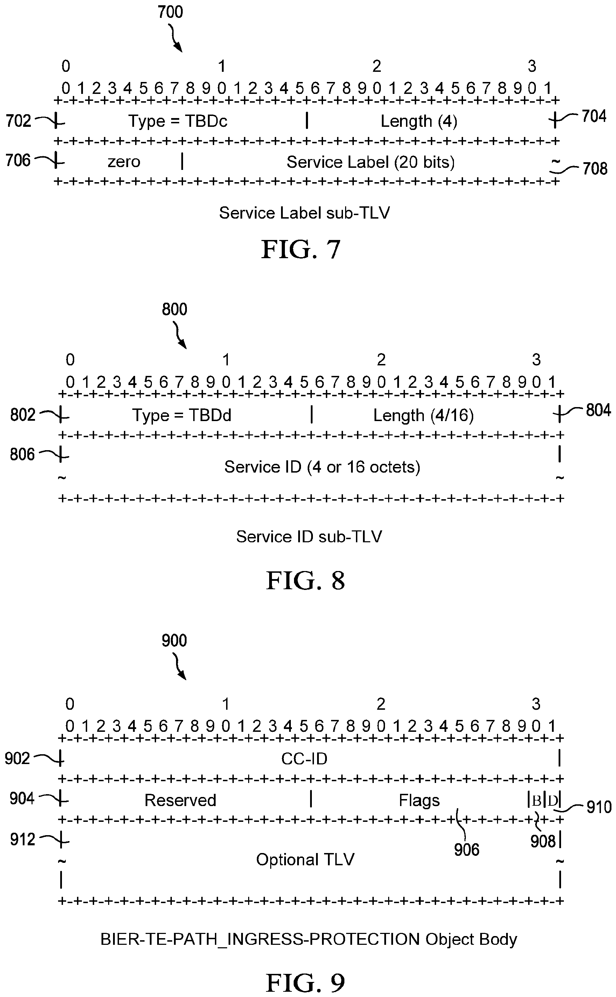

FIG. 7 is a schematic diagram of a Service Label sub-TLV 700 according to an embodiment of the disclosure. In an embodiment, the Service Label sub-TLV 700 is carried in the sub-TLVs field 412 of the BIER-TE-Path_Ingress _Protection TLV 400.

The Service Label sub-TLV 700 comprises a type field 702, a length field 704, a zero field 706, and a service label field 708. The type field 702 is 16 bits and the value in the type field 702 is to be assigned by the IANA. The length field 704 is 16 bits. In an embodiment, the value in the length field 704 is 4 to indicate that 4 bytes is the total length of the remainder of the sub-TLV, excluding the Type and Length fields 702, 704. The zero field 706 is 8 bits. In an embodiment, the zero field 706 is set to zero by the sender of the Service Label sub-TLV 700 and ignored by the receiver of the Service Label sub-TLV 700.

The service label field 708 is 20 bits and includes a value that identifies a service. The service identified by the value in the service label field 708 may be, for example, a virtual private network (VPN). Other types of services may be identified in practical applications.

FIG. 8 is a schematic diagram of a Service Identifier (ID) sub-TLV 800 according to an embodiment of the disclosure. In an embodiment, the Service ID sub-TLV 800 is carried in the sub-TLVs field 412 of the BIER-TE-Path_Ingress _Protection TLV 400.

The Service ID sub-TLV 800 comprises a type field 802, a length field 804, and a service ID field 806. The type field 802 is 16 bits and the value in the type field 802 is to be assigned by the IANA. The length field 804 is 16 bits. In an embodiment, the value in the length field 804 is 4 or 16 to indicate that the service ID field 806 is either 4 bytes or 16 bytes, respectively.

The service ID field 806 is 4 or 16 octets and includes a value (e.g., a service ID) that identifies a service. The service identified by the value in the service ID field 806 may be, for example, a VPN. Other types of services may be identified in practical applications.

FIG. 9 is a schematic diagram of a BIER-TE-Path_Ingress-Protection Object Body 900 according to an embodiment of the disclosure. The BIER-TE-Path_Ingress-Protection Object Body 900 has a new object type (TBDt) for BIER-TE ingress protection and is based on a central controller instructions (CCI) object. The BIER-TE-Path_Ingress-Protection Object Body 900 is used by the PCE (e.g., network controller 130) to specify the forwarding instructions (e.g., label information) to the PCC. In an embodiment, the BIER-TE-Path_Ingress-Protection Object Body 900 is included in a path computation LSP state report (PCRpt) message, a path computation LSP update request (PCUpd) message, or a PCInitiate message.

The BIER-TE-Path_Ingress-Protection Object Body 900 comprises a central controller identifier (CC-ID) field 902, a reserved field 904, a flags field 906, and an optional TLV field 912. The CC-ID field 902 is 32 bits and contains a PCEP-specific identifier for the CCI information. A PCE creates a CC-ID for each instruction. The value in the CC-ID field 902 is unique within the scope of the PCE and is constant for the lifetime of a PCEP session.

The reserved field 904 is 16 bits. In an embodiment, the reserved field 904 is set to zero by the sender of the BIER-TE-Path_Ingress-Protection Object Body 900 and ignored by the receiver of the BIER-TE-Path_Ingress-Protection Object Body 900.

The flags field 906 includes one or more flags, such as the B flag 908 and the D flag 910. The B flag 908 is set to a first binary value (e.g., 1) to instruct the traffic source (e.g., network node 118) to send the traffic to both the primary ingress node (e.g., network node 104) and the backup ingress node (e.g., network node 112). The D flag 910 instructs the traffic source to detect the failure of the primary ingress node and to switch the traffic to the backup ingress when the traffic source detects the failure. The optional TLV field 912 may include a primary ingress TLV, a backup ingress TLV, and/or a multicast flow specification TLV.

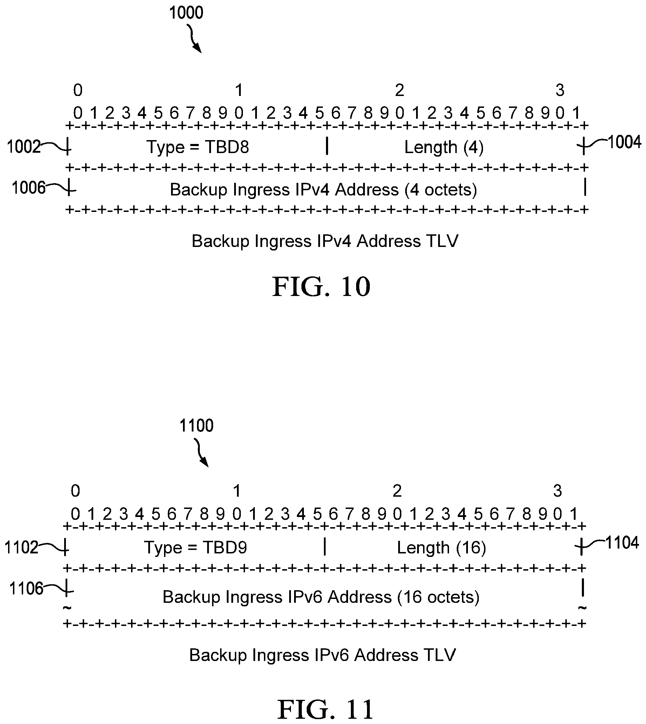

FIG. 10 is a schematic diagram of a Backup Ingress IPv4 Address TLV 1000 according to an embodiment of the disclosure. In an embodiment, the Backup Ingress IPv4 Address TLV 1000 is carried in the optional TLV field 912 of the BIER-TE-Path_Ingress-Protection Object Body 900.

The Backup Ingress IPv4 Address TLV 1000 comprises a type field 1002, a length field 1004, and a backup ingress IPv4 Address field 1006. The type field 1002 is 16 bits and the value in the type field 1002 is to be assigned by the IANA. The length field 1004 is 16 bits. In an embodiment, the value in the length field 1004 is 4 to indicate that the backup ingress IPv4 Address field 1006 is 32 bits. The backup ingress IPv4 Address field 1006 contains the IPv4 address of the backup ingress node. For example, the backup ingress IPv4 Address field 1006 may include the IPv4 address of network node 112 in FIG. 1.

FIG. 11 is a schematic diagram of a Backup Ingress IPv6 Address TLV 1100 according to an embodiment of the disclosure. In an embodiment, the Backup Ingress IPv6 Address TLV 1100 is carried in the optional TLV field 912 of the BIER-TE-Path_Ingress-Protection Object Body 900.

The Backup Ingress IPv6 Address TLV 1100 comprises a type field 1102, a length field 1104, and a backup ingress IPv6 Address field 1106. The type field 1102 is 16 bits and the value in the type field 1102 is to be assigned by the IANA. The length field 1104 is 16 bits. In an embodiment, the value in the length field 1104 is 16 to indicate that the backup ingress IPv6 Address field 1106 is 128 bits. The backup ingress IPv6 Address field 1106 contains the IPv6 address of the backup ingress node. For example, the backup ingress IPv6 Address field 1106 may include the IPv6 address of network node 112 in FIG. 1.

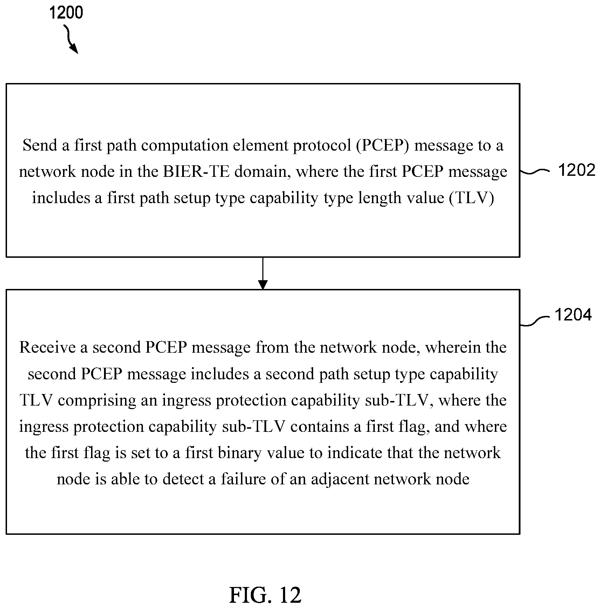

FIG. 12 is a method 1200 implemented by a network controller (e.g., network controller 130) configured to control the BIER-TE domain 102 according to an embodiment of the disclosure. The method 1200 may be performed by the network controller to establish ingress protection for a BIER-TE path from an ingress node to egress nodes.

In block 1202, the network controller sends a first path computation element protocol (PCEP) message to a network node in the BIER-TE domain. The first PCEP message includes a first path setup type capability TLV. In block 1204, the network controller receives a second PCEP message from the one or more network nodes. The second PCEP message includes a second path setup type capability TLV. The second path setup type capability TLV comprises an ingress protection capability sub-TLV containing a first flag. The first flag is set to a first binary value to indicate that the network node is able to detect a failure of an adjacent network node.

In an embodiment, the first PCEP message is an open message. The first path setup type capability TLV includes a first central controller (PCECC) sub-type length value (sub-TLV) containing a second flag. The second flag is set to the first binary value to indicate that the PCE supports and is willing to handle PCECC-based central controller instructions for ingress protection.

In an embodiment, the first path setup type capability TLV includes a path setup type (PST) containing a first value that indicates the path setup type capability TLV is for a BIER-TE path.

In an embodiment, the network node includes a backup ingress node of the BIER-TE domain or a customer edge (CE). The second PCEP message is an open message. The second path setup type capability TLV contains the first value.

In an embodiment, the second path setup type capability TLV contains a second central controller (PCECC) sub-type length value (sub-TLV) including a third flag. The third flag is set to the first binary value to indicate that the network node supports and is willing to handle PCECC-based central controller instructions for ingress protection.

In an embodiment, the method 1200 further comprises determining that the network node will be responsible for detecting the failure of the adjacent network node based on the first binary value of the first flag in the second PCEP message from the network node. That is, the method 1200 includes the PCE determining whether to implement the first case, the second case, or the third case described above.

In an embodiment, the network nodes comprises a backup ingress node, and the method 1200 further comprises sending a third PCEP message (e.g., a PCInitiate message) to the backup ingress node. The third PCEP message includes an ingress protection TLV containing: a fourth flag (e.g., the A flag) set to the first binary value to request that a forwarding entry for a backup BIER-TE path be active always; and a service sub-TLV including a service label or a service identifier. This embodiment corresponds to the first case described above.

In an embodiment, the network node comprises a backup ingress node, and the method 1200 further comprises sending a third PCEP message to the backup ingress node. The third PCEP message includes an ingress protection TLV. The ingress protection TLV contains a fourth flag (e.g., the A flag) set to a second binary value to request that the backup ingress node detect the failure of a primary ingress node and to let a forwarding entry for a backup BIER-TE path be active when the primary ingress node fails. The ingress protection TLV also contains service sub-TLV including a service label or a service identifier. The ingress protection TLV further contains primary ingress sub-TLV including a primary ingress address. This embodiment corresponds to the second case and the third case described above.

In an embodiment, the network node comprises a CE, and the method 1200 further comprises sending a fourth PCEP message (e.g., PCRpt, PCUpd, or PCInitiate message) to the CE. The fourth PCEP message includes an ingress protection object body containing a fifth flag (e.g., the D flag in the BIER-TE-Path_Ingress-Protection Object Body 900) and a sixth flag (e.g., the B flag). The fifth flag is set to the first binary value to instruct the CE to detect the failure of a primary ingress node and to switch traffic to a backup ingress node when the CE detects the failure. The sixth flag is set to a second binary value. This embodiment corresponds to the first case and the third case described above.

In an embodiment, the network node comprises a CE, and the method 1200 further comprises sending a fourth PCEP message to the CE. The fourth PCEP message includes an ingress protection object body containing a fifth flag and a sixth flag. The fifth flag is set to a second binary value, and the sixth flag is set to the first binary value to instruct the CE to send traffic to both a primary ingress node and a backup ingress node. This embodiment corresponds to the second case described above.

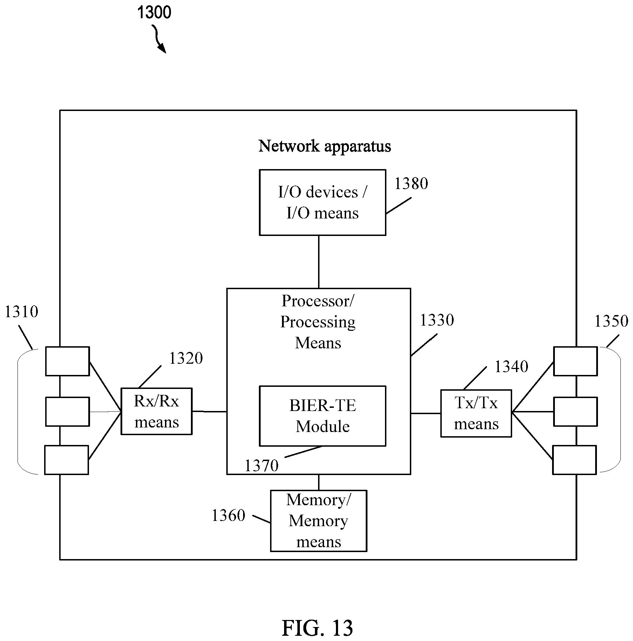

FIG. 13 is a schematic diagram of a network apparatus 1300 (e.g., a network controller, a network node, etc.). The network apparatus 1300 is suitable for implementing the disclosed embodiments as described herein. The network apparatus 1300 comprises ingress ports/ingress means 1310 (a.k.a., upstream ports) and receiver units (Rx)/receiving means 1320 for receiving data; a processor, logic unit, or central processing unit (CPU)/processing means 1330 to process the data; transmitter units (Tx)/transmitting means 1340 and egress ports/egress means 1350 (a.k.a., downstream ports) for transmitting the data; and a memory/memory means 1360 for storing the data. The network apparatus 1300 may also comprise optical-to-electrical (OE) components and electrical-to-optical (EO) components coupled to the ingress ports/ingress means 1310, the receiver units/receiving means 1320, the transmitter units/transmitting means 1340, and the egress ports/egress means 1350 for egress or ingress of optical or electrical signals.

The processor/processing means 1330 is implemented by hardware and software. The processor/processing means 1330 may be implemented as one or more CPU chips, cores (e.g., as a multi-core processor), field-programmable gate arrays (FPGAs), application specific integrated circuits (ASICs), and digital signal processors (DSPs). The processor/processing means 1330 is in communication with the ingress ports/ingress means 1310, receiver units/receiving means 1320, transmitter units/transmitting means 1340, egress ports/egress means 1350, and memory/memory means 1360. The processor/processing means 1330 comprises a BIER-TE module 1370. The BIER-TE module 1370 is able to implement the methods disclosed herein. The inclusion of the BIER-TE module 1370 therefore provides a substantial improvement to the functionality of the network apparatus 1300 and effects a transformation of the network apparatus 1300 to a different state. Alternatively, the BIER-TE module 1370 is implemented as instructions stored in the memory/memory means 1360 and executed by the processor/processing means 1330.

The network apparatus 1300 may also include input and/or output (I/O) devices or I/O means 1380 for communicating data to and from a user. The I/O devices or I/O means 1380 may include output devices such as a display for displaying video data, speakers for outputting audio data, etc. The I/O devices or I/O means 1380 may also include input devices, such as a keyboard, mouse, trackball, etc., and/or corresponding interfaces for interacting with such output devices.

The memory/memory means 1360 comprises one or more disks, tape drives, and solid-state drives and may be used as an over-flow data storage device, to store programs when such programs are selected for execution, and to store instructions and data that are read during program execution. The memory/memory means 1360 may be volatile and/or non-volatile and may be read-only memory (ROM), random access memory (RAM), ternary content-addressable memory (TCAM), and/or static random-access memory (SRAM).

## Claims

1. A method (1200) implemented by a path computation element (130), PCE, configured to control a Bit Index Explicit Replication Traffic/Tree Engineering, BIER-TE, domain (102), the method being **characterized in** comprising:
sending (1202) a first path computation element protocol, PCEP, message to a network node in the BIER-TE domain, wherein the first PCEP message includes a first path setup type capability type length value, TLV, and wherein the network node comprises a backup ingress node in the BIER-TE domain;
receiving (1204) a second PCEP message from the network node, wherein the second PCEP message includes a second path setup type capability TLV comprising an ingress protection capability sub-TLV, wherein the ingress protection capability sub-TLV contains a first flag, and wherein the first flag is set to a first binary value to indicate that the network node is able to detect a failure of an adjacent network node; and
sending a third PCEP message to the backup ingress node, wherein the third PCEP message includes an ingress protection TLV containing:
a fourth flag set to a second binary value to request that the backup ingress node detect the failure of a primary ingress node and to let a forwarding entry for a backup BIER-TE path be active when the primary ingress node fails;
a service sub-TLV including a service label or a service identifier; and
a primary ingress sub-TLV including a primary ingress address.

2. The method of claim 1, wherein the first PCEP message is an open message, and wherein the first path setup type capability TLV includes a first central controller, PCECC, sub-type length value, sub-TLV, containing a second flag, and wherein the second flag is set to the first binary value to indicate that the PCE supports and is willing to handle PCECC-based central controller instructions for ingress protection.

3. The method of claim 1-2, wherein the first path setup type capability TLV includes a path setup type, PST, containing a first value that indicates the path setup type capability TLV is for a BIER-TE path.

4. The method of any claims 1-3, wherein the second PCEP message is an open message, and wherein the second path setup type capability TLV contains the first value.

5. The method of any claims 1-4, wherein the second path setup type capability TLV contains a second central controller, PCECC, sub-type length value, sub-TLV, including a third flag, and wherein the third flag is set to the first binary value to indicate that the network node supports and is willing to handle PCECC-based central controller instructions for ingress protection.

6. The method of any of claims 1-5, further comprising determining that the network node will be responsible for detecting the failure of the adjacent network node based on the first binary value of the first flag in the second PCEP message from the network node.

7. A path computation element (130), PCE, configured to control a Bit Index Explicit Replication Traffic/Tree Engineering, BIER-TE, domain (102), comprising:
a memory (1360) storing instructions;
one or more processors (1330) coupled to the memory, wherein the one or more processors are characterized to be configured to execute the instructions to cause the PCE to:
send (1202) a first path computation element protocol, PCEP, message to a network node in the BIER-TE domain, wherein the first PCEP message includes a first path setup type capability type length value, TLV, and wherein the network node comprises a backup ingress node;
receive (1204) a second PCEP message from the network node, wherein the second PCEP message includes a second path setup type capability TLV comprising an ingress protection capability sub-TLV, wherein the ingress protection capability sub-TLV contains a first flag, and wherein the first flag is set to a first binary value to indicate that the network node is able to detect a failure of an adjacent network node; and
send a third PCEP message to the backup ingress node, wherein the third PCEP message includes an ingress protection TLV containing:
a fourth flag set to a second binary value to request that the backup ingress node detect the failure of a primary ingress node and to let a forwarding entry for a backup BIER-TE path be active when the primary ingress node fails;
a service sub-TLV including a service label or a service identifier; and
a primary ingress sub TLV including a primary ingress address.

8. The PCE of claim 7, wherein the first PCEP message is an open message, wherein the first path setup type capability TLV of the open message includes a path setup type, PST, containing a first value that indicates the path setup type capability TLV is for a BIER-TE path.

9. The PCE of claim 7 or 8, wherein the first path setup type capability TLV includes a first central controller, PCECC, sub-type length value, sub-TLV, containing a second flag, and wherein the second flag is set to the first binary value to indicate that the PCE supports and is willing to handle PCECC-based central controller instructions for ingress protection.

10. The PCE of any of claims 7 to 9, wherein the second PCEP message is an open message, and wherein the second path setup type capability TLV contains the first value.

11. The PCE of any of claims 7 to 10, wherein the second path setup type capability TLV contains a second central controller, PCECC, sub-type length value, sub-TLV, including a third flag, and wherein the third flag is set to the first binary value to indicate that the network node supports and is willing to handle PCECC-based central controller instructions for ingress protection.

12. The PCE of any of claims 7 to 11, wherein the one or more processors are further configured to determine that the network node will be responsible for detecting the failure of the adjacent network node based on the first binary value of the first flag in the second PCEP message from the network node.

## Patentansprüche

1. Verfahren (1200), das durch ein Pfadberechnungselement (130), PCE, implementiert wird, das dazu konfiguriert ist, eine Bit-Index-Explicit-Replication-Traffic/Tree-Engineering-Domäne,
BIER-TE-Domäne, (102) zu steuern, wobei das Verfahren **dadurch gekennzeichnet ist, dass** es Folgendes umfasst:
Senden (1202) einer ersten Pfadberechnungselementprotokollnachricht, PCEP-Nachricht, an einen Netzwerkknoten in der BIER-TE-Domäne, wobei die erste PCEP-Nachricht einen ersten Pfadeinstellungstypfähigkeits-Typlängenwert, Pfadeinstellungstypfähigkeits-TLV, beinhaltet, und
wobei der Netzwerkknoten einen Backup-Eingangsknoten in der BIER-TE-Domäne umfasst;
Empfangen (1204) einer zweiten PCEP-Nachricht von dem Netzwerkknoten, wobei die zweite PCEP-Nachricht einen zweiten Pfadeinstellungstypfähigkeits-TLV beinhaltet, der einen Eingangsschutzfähigkeits-Sub-TLV umfasst, wobei der Eingangsschutzfähigkeits-Sub-TLV ein erstes Flag enthält und wobei das erste Flag auf einen ersten Binärwert gesetzt ist, um anzugeben, dass der Netzwerkknoten in der Lage ist, einen Ausfall eines benachbarten Netzwerkknotens zu detektieren; und
Senden einer dritten PCEP-Nachricht an den Backup-Eingangsknoten, wobei die dritte PCEP-Nachricht einen Eingangsschutz-TLV beinhaltet, der Folgendes enthält:
ein viertes Flag, das auf einen zweiten Binärwert gesetzt ist, um anzufordern, dass der Backup-Eingangsknoten den Ausfall eines primären Eingangsknotens detektiert, und einen Weiterleitungseintrag für einen Backup-BIER-TE-Pfad aktiv werden zu lassen, wenn der primäre Eingangsknoten ausfällt;
einen Dienst-Sub-TLV, der eine Dienstbezeichnung oder eine Dienstkennung beinhaltet; und
einen primären Eingangs-Sub-TLV, der eine primäre Eingangsadresse beinhaltet.

2. Verfahren nach Anspruch 1, wobei die erste PCEP-Nachricht eine offene Nachricht ist und wobei der erste Pfadeinstellungstypfähigkeits-TLV einen ersten Zentralsteuerungs-Subtyplängenwert, PCECC-Sub-TLV, beinhaltet, der ein zweites Flag enthält, und wobei das zweite Flag auf den ersten Binärwert gesetzt ist, um anzugeben, dass das PCE PCECC-basierte Anweisungen der Zentralsteuerung zum Eingangsschutz unterstützt und bereit ist, diese zu behandeln.

3. Verfahren nach Anspruch 1-2, wobei der erste Pfadeinstellungstypfähigkeits-TLV einen Pfadeinstellungstyp, PST, beinhaltet, der einen ersten Wert enthält, der angibt, dass der Pfadeinstellungstypfähigkeits-TLV für einen BIER-TE-Pfad ist.

4. Verfahren nach einem der Ansprüche 1-3,
wobei die zweite PCEP-Nachricht eine offene Nachricht ist und wobei der zweite Pfadeinstellungstypfähigkeits-TLV den ersten Wert enthält.

5. Verfahren nach einem der Ansprüche 1-4, wobei der zweite Pfadeinstellungstypfähigkeits-TLV einen zweiten Zentralsteuerungs-Subtyplängenwert, PCECC-Sub-TLV, enthält, der ein drittes Flag beinhaltet, und wobei das dritte Flag auf den ersten Binärwert gesetzt ist, um anzugeben, dass der Netzwerkknoten PCECC-basierte Anweisungen der Zentralsteuerung zum Eingangsschutz unterstützt und bereit ist, diese zu behandeln.

6. Verfahren nach einem der Ansprüche 1-5, ferner umfassend Bestimmen basierend auf dem ersten Binärwert des ersten Flags in der zweiten PCEP-Nachricht von dem Netzwerkknoten, dass der Netzwerkknoten für das Detektieren des Ausfalls des benachbarten Netzwerkknotens verantwortlich sein wird.

7. Pfadberechnungselement (130), PCE, das dazu konfiguriert ist, eine Bit-Index-Explicit-Replication-Traffic/Tree-Engineering-Domäne, BIER-TE-Domäne, (102) zu steuern, umfassend:
einen Speicher (1360), der Anweisungen speichert;
einen oder mehrere Prozessoren (1330), die mit dem Speicher gekoppelt sind, wobei der eine oder die mehreren Prozessoren **dadurch gekennzeichnet sind, dass** sie dazu konfiguriert sind, die Anweisungen auszuführen, um das PCE zu Folgendem zu veranlassen:
Senden (1202) einer ersten Pfadberechnungselementprotokollnachricht, PCEP-Nachricht, an einen Netzwerkknoten in der BIER-TE-Domäne, wobei die erste PCEP-Nachricht einen ersten Pfadeinstellungstypfähigkeits-Typlängenwert, Pfadeinstellungstypfähigkeits-TLV, beinhaltet und wobei der Netzwerkknoten einen Backup-Eingangsknoten umfasst;
Empfangen (1204) einer zweiten PCEP-Nachricht von dem Netzwerkknoten, wobei die zweite PCEP-Nachricht einen zweiten Pfadeinstellungstypfähigkeits-TLV beinhaltet, der einen Eingangsschutzfähigkeits-Sub-TLV umfasst, wobei der Eingangsschutzfähigkeits-Sub-TLV ein erstes Flag enthält und wobei das erste Flag auf einen ersten Binärwert gesetzt ist, um anzugeben, dass der Netzwerkknoten in der Lage ist, einen Ausfall eines benachbarten Netzwerkknotens zu detektieren; und
Senden einer dritten PCEP-Nachricht an den Backup-Eingangsknoten, wobei die dritte PCEP-Nachricht einen Eingangsschutz-TLV beinhaltet, der Folgendes enthält:
ein viertes Flag, das auf einen zweiten Binärwert gesetzt ist, um anzufordern, dass der Backup-Eingangsknoten den Ausfall eines primären Eingangsknotens detektiert, und einen Weiterleitungseintrag für einen Backup-BIER-TE-Pfad aktiv werden zu lassen, wenn der primäre Eingangsknoten ausfällt;
einen Dienst-Sub-TLV, der eine Dienstbezeichnung oder eine Dienstkennung beinhaltet; und
einen primären Eingangs-Sub-TLV, der eine primäre Eingangsadresse beinhaltet.

8. PCE nach Anspruch 7, wobei die erste PCEP-Nachricht eine offene Nachricht ist und wobei die erste Pfadeinstellungstypfähigkeits-TLV der offenen Nachricht einen Pfadeinstellungstyp, PST, beinhaltet,
der einen ersten Wert enthält, der angibt, dass der Pfadeinstellungstypfähigkeits-TLV für einen BIER-TE-Pfad ist.

9. PCE nach Anspruch 7 oder 8, wobei der erste Pfadeinstellungstypfähigkeits-TLV einen ersten Zentralsteuerungs-Subtyplängenwert, PCECC-Sub-TLV, beinhaltet, der ein zweites Flag enthält, und wobei das zweite Flag auf den ersten Binärwert gesetzt ist, um anzugeben, dass das PCE PCECC-basierte Anweisungen der Zentralsteuerung zum Eingangsschutz unterstützt und bereit ist, diese zu behandeln.

10. PCE nach einem der Ansprüche 7 bis 9,
wobei die zweite PCEP-Nachricht eine offene Nachricht ist und wobei der zweite Pfadeinstellungstypfähigkeits-TLV den ersten Wert enthält.

11. PCE nach einem der Ansprüche 7 bis 10, wobei der zweite Pfadeinstellungstypfähigkeits-TLV einen zweiten Zentralsteuerungs-Subtyplängenwert, PCECC-Sub-TLV, enthält,
der ein drittes Flag beinhaltet, und wobei das dritte Flag auf den ersten Binärwert gesetzt ist, um anzugeben, dass der Netzwerkknoten PCECC-basierte Anweisungen der Zentralsteuerung zum Eingangsschutz unterstützt und bereit ist, diese zu behandeln.

12. PCE nach einem der Ansprüche 7 bis 11, wobei der eine oder die mehreren Prozessoren ferner dazu konfiguriert sind, basierend auf dem ersten Binärwert des ersten Flags in der zweiten PCEP-Nachricht von dem Netzwerkknoten zu bestimmen, dass der Netzwerkknoten für das Detektieren des Ausfalls des benachbarten Netzwerkknotens verantwortlich sein wird.

## Revendications

1. Procédé (1200) mis en œuvre par un élément de calcul de trajet (130), PCE, configuré pour commander un domaine (102) de trafic/ingénierie arborescente de réplication explicite **d'indice** binaire, BIER-TE, le procédé étant **caractérisé en ce qu'**il comprend :
l'envoi (1202) **d'un** premier message de protocole **d'élément** de calcul de trajet, PCEP, à un nœud de réseau dans le domaine BIER-TE, dans lequel le premier message PCEP comporte une première valeur de longueur de type, TLV, de capacité de type d'établissement de trajet, et
dans lequel le nœud de réseau comprend un nœud d'entrée de secours dans le domaine BIER-TE ;
la réception (1204) d'un deuxième message PCEP à partir du nœud de réseau, dans lequel le deuxième message PCEP comporte une seconde TLV de capacité de type d'établissement de trajet comprenant une sous-TLV de capacité de protection contre une intrusion, dans lequel la sous-TLV de capacité de protection contre une intrusion contient un premier indicateur, et dans lequel le premier indicateur est réglé sur une première valeur binaire pour indiquer que le nœud de réseau est apte à détecter une défaillance d'un nœud de réseau adjacent ; et
l'envoi d'un troisième message PCEP au nœud d'entrée de secours, dans lequel le troisième message PCEP comporte une TLV de protection contre une intrusion contenant :
un quatrième indicateur réglé sur une seconde valeur binaire pour demander que le nœud d'entrée de secours détecte la défaillance d'un nœud d'entrée primaire et laisse active une entrée de retransmission pour un trajet BIER-TE de secours lorsque le nœud d'entrée primaire tombe en panne ;
une sous-TLV de service comportant une étiquette de service ou un identifiant de service ; et
une sous-TLV d'entrée primaire comportant une adresse d'entrée primaire.

2. Procédé selon la revendication 1, dans lequel le premier message PCEP est un message ouvert, et dans lequel la première TLV de capacité de type d'établissement de trajet comporte une première valeur de longueur de sous-type, sous-TLV, de contrôleur central, PCECC, contenant un deuxième indicateur, et dans lequel le deuxième indicateur est réglé sur la première valeur binaire pour indiquer que le PCE prend en charge et est disposé à gérer des instructions de contrôleur central basées sur PCECC pour la protection contre une intrusion.

3. Procédé selon la revendication 1 et 2, dans lequel la première TLV de capacité de type d'établissement de trajet comporte un type d'établissement de trajet, PST, contenant une première valeur qui indique que la TLV de capacité de type d'établissement de trajet est pour un trajet BIER-TE.

4. Procédé selon l'une quelconque des revendications 1 à 3,
dans lequel le deuxième message PCEP est un message ouvert, et dans lequel la seconde TLV de capacité de type d'établissement de trajet contient la première valeur.

5. Procédé selon l'une quelconque des revendications 1 à 4, dans lequel la seconde TLV de capacité de type d'établissement de trajet contient une seconde valeur de longueur de sous-type, sous-TLV, de contrôleur central, PCECC, comportant un troisième indicateur, et dans lequel le troisième indicateur est réglé sur la première valeur binaire pour indiquer que le nœud de réseau prend en charge et est disposé à traiter des instructions de contrôleur central basées sur PCECC pour une protection contre une intrusion.

6. Procédé selon l'une quelconque des revendications 1 à 5, comprenant également la détermination que le nœud de réseau sera responsable de la détection de la défaillance du nœud de réseau adjacent sur la base de la première valeur binaire du premier indicateur dans le deuxième message PCEP en provenance du nœud de réseau.

7. Élément de calcul de trajet (130), PCE, configuré pour commander un domaine (102) de trafic/ingénierie arborescente de réplication explicite d'indice binaire, BIER-TE, comprenant :
une mémoire (1360) stockant des instructions ;
un ou plusieurs processeurs (1330) couplés à la mémoire, dans lequel les un ou plusieurs processeurs sont caractérisés comme étant configurés pour exécuter les instructions pour amener le PCE à :
envoyer (1202) un premier message de protocole d'élément de calcul de trajet, PCEP, à un nœud de réseau dans le domaine BIER-TE, dans lequel le premier message PCEP comporte une première valeur de longueur de type, TLV, de capacité de type d'établissement de trajet, et dans lequel le nœud de réseau comprend un nœud d'entrée de secours ;
recevoir (1204) un deuxième message PCEP à partir du nœud de réseau, dans lequel le deuxième message PCEP comporte une seconde TLV de capacité de type d'établissement de trajet comprenant une sous-TLV de capacité de protection contre une intrusion, dans lequel la sous-TLV de capacité de protection contre une intrusion contient un premier indicateur, et dans lequel le premier indicateur est réglé sur une première valeur binaire pour indiquer que le nœud de réseau est apte à détecter une défaillance d'un nœud de réseau adjacent ; et
envoyer un troisième message PCEP au nœud d'entrée de secours, dans lequel le troisième message PCEP comporte une TLV de protection contre une intrusion contenant :
un quatrième indicateur réglé sur une seconde valeur binaire pour demander que le nœud d'entrée de secours détecte la défaillance d'un nœud d'entrée primaire et laisse active une entrée de retransmission pour un trajet BIER-TE de secours lorsque le nœud d'entrée primaire tombe en panne ;
une sous-TLV de service comportant une étiquette de service ou un identifiant de service ; et
une sous-TLV d'entrée primaire comportant une adresse d'entrée primaire.

8. PCE selon la revendication 7, dans lequel le premier message PCEP est un message ouvert, dans lequel la TLV de capacité de type d'établissement de trajet du message ouvert comporte un type d'établissement de trajet, PST,
contenant une première valeur qui indique que la TLV de capacité de type d'établissement de trajet est pour un trajet BIER-TE.

9. PCE selon la revendication 7 ou 8, dans lequel la première TLV de capacité de type d'établissement de trajet comporte une première valeur de longueur de sous-type, sous-TLV, de contrôleur central, PCECC,
contenant un deuxième indicateur, et dans lequel le deuxième indicateur est réglé sur la première valeur binaire pour indiquer que le PCE prend en charge et est disposé à gérer des instructions de contrôleur central basées sur PCECC pour une protection contre une intrusion.

10. PCE selon l'une quelconque des revendications 7 à 9,
dans lequel le deuxième message PCEP est un message ouvert, et dans lequel la seconde TLV de capacité de type d'établissement de trajet contient la première valeur.

11. PCE selon l'une quelconque des revendications 7 à 10, dans lequel la seconde TLV de capacité de type d'établissement de trajet contient une seconde valeur de longueur de sous-type, sous-TLV, de contrôleur central, PCECC,
comportant un troisième indicateur, et dans lequel le troisième indicateur est réglé sur la première valeur binaire pour indiquer que le nœud de réseau prend en charge et est disposé à gérer des instructions de contrôleur central basées sur PCECC pour une protection contre une intrusion.

12. PCE selon l'une quelconque des revendications 7 à 11, dans lequel les un ou plusieurs processeurs sont également configurés pour déterminer que le nœud de réseau sera responsable de la détection de la défaillance du nœud de réseau adjacent sur la base de la première valeur binaire du premier indicateur dans le deuxième message PCEP en provenance du nœud de réseau.
